# EUROPEAN PATENT APPLICATION

(11) **EP 1 204 070 A1**
(43) Date of publication of application: **08.05.2002**
(21) Application number: 00610106.7
(22) Date of filing: 27.10.2000
(51) Int. Cl.: G06K 11/08

(54) **A portable radio communications device**

(71) Applicant: Telefonaktiebolaget L M Ericsson (Publ), 126 25 Stockholm (SE)
(72) Inventor: Frohlund, Stig, 281 38 Hässleholm (SE)
(74) Representative: Boesen, Johnny Peder

(57) **Abstract**

A portable radio communications device (1) has a display (6) on which a position indicator (7) can be positioned, and means (8) for controlling the position of the position indicator (7) on the display (6) manually by a user. The controlling means comprise an optical emitter adapted to illuminate an object through a translucent and moisture-proof surface; an optical detector adapted to detect changes in light reflected from the object due to the movement thereof; and circuitry for generating a control signal for the position of the position indicator (7) in dependence on the changes in reflected light. The optical detection of the movement of a finger provides a very easily operated control device with no need to press the finger against the device, and thus forces on the printed circuit boards are avoided. The moisture-proof surface ensures that the device is insensitive to dirt and moisture.

## Description

### Technical Field of the Invention

The invention relates to a portable radio communications device having a display on which a position indicator can be positioned, and means for controlling the position of the position indicator on the display manually by a user.

### Description of Related Art

Modern portable radio communications devices, such as e.g. mobile telephones, are increasingly used for the presentation of information to a user on a display. This information can be e.g. call information, received messages, messages to be sent from the device or information downloaded from a network, such as the internet. In many of these situations it is necessary or convenient to be able to control the position of a position indicator, such as a pointer or cursor, on the display.

Several solutions to the control of a cursor on the display of a portable communications device are known. Very common is a set of arrow keys, typically two up/down keys and two left/right keys arranged e.g. in a diamond configuration. Pressing one of the keys effects the movement of the cursor a step in a direction corresponding to the key. However this solution is relatively time consuming when the cursor has to be moved a longer distance on the display. Further, the four keys must have a sufficiently large size and thus they occupy a considerable area on the communications device, and this is incompatible with the increasing demand for smaller and smaller devices.

Another solution is to use a joystick as shown in e.g. JP 8-307 495. This allows a faster movement of the cursor, but since the joystick necessarily has to be mounted so that it extends from the surface of the communications device, it will very easily stick to the clothing e.g. when the device is taken out of a pocket. This means that the user may loose the grip of the device or that the joystick itself may break off.

A further solution is disclosed in EP 463 856 which suggests the use of a thumb wheel or a thumb ball for scanning menus on the display of a mobile telephone. Also this solution takes up a considerable area on the device.

All these solutions include mechanical components which will always be subjected to some sort of mechanical wear resulting in reliability problems. Another problem is that dirt and moisture can enter into the mechanical components and thus accelerate the wear and disturb the contact surfaces. This problem is of particular importance with the portable communications devices, because they are often kept in dirty and damp pockets for long periods of time or even used in rainy weather. The mechanical solutions also have the disadvantage that in order to operate them, the user has to press with a finger on the keys, the joystick or the thumb ball. This pressure creates mechanical forces which are easily transported to printed circuit boards inside the device where they could cause soldered connections to be broken.

Therefore, it is an object of the invention to provide a portable radio communications device of the above-mentioned type which is more suitable to use in the above-mentioned environments for portable communications devices, which means that the solution should not be sensitive to dirt and moisture, and the operation of the device should not require that fingers are pressed against the device.

### Summary

According to the invention the object is achieved in that the controlling means comprise an optical emitter adapted to illuminate an external object through a translucent and moisture-proof surface; an optical detector adapted to detect changes in light reflected from said external object due to the movement thereof; and circuitry for generating a control signal for the position of said position indicator in dependence on said changes in reflected light.

The use of optical detection of the movement of an object, such as a finger, through a translucent and moisture-proof surface of the portable radio communications device provides a very easily operated control device. The finger is just moved across the device, and there is no need to press the finger against the device. In this way forces on the printed circuit boards are avoided. The moisture-proof surface ensures that the device is not sensitive to dirt and moisture.

The use of optical control of a cursor on a display is known in relation to computers, e.g. from US 5 801 681 and EP 942 285, but although these devices avoid the use of mechanical moving parts, the use on portable communications devices, such as mobile telephones, is not suggested, and there is no indication that the devices should be able to solve the dirt and moisture problem, which is unavoidable for portable communications devices but not relevant to computers. Further, the optical control of the cursor on a display allows a user to operate the portable communications device with gloves, which is very advantageous in relation to portable communications devices, because they are often used outside in the winter time, but which is hardly relevant to computers.

In expedient embodiments the communications device is a mobile telephone, and the position indicator can be a cursor.

When the optical emitter emits infrared light, it is ensured that the emitted light is not visible from the outside of the device. This embodiment is often preferred, because users are interested in a function and not in how such a function is implemented.

Alternatively, when the optical emitter emits visible light, a high-tech look that could be attractive to especially young people is provided.

When the circuitry for generating a control signal is further adapted to generate a selection signal for selecting an item indicated on said display by the position of said position indicator, the control means can also be used to activate e.g. a function which has been indicated by moving the position indicator to a corresponding item on the display. This is similar to the use of a mouse button on a normal computer mouse, but the selection can be performed without the addition of a separate button. The activation can take place by e.g. removing the external object from the controlling means or by placing the object thereon for only a short time. In this way all the keys or buttons, or at least most of them, on a portable communications device can be replaced by showing the keys on the display and then selecting one of them with the controlling means of the invention.

When the controlling means are arranged in a surface of the device adjacent to said display, a solution which is very easily operated is achieved, because the user is able to look at the control device and the display with the cursor simultaneously.

### Brief Description of the Drawings

The invention will now be described more fully below with reference to the drawings, in which
figure 1 shows a mobile telephone in which the invention can be used,
figure 2 shows an example of an implementation of a control device,
figure 3 shows a detector when no object is placed on the control device,
figure 4 shows the detector of figure 3 with a finger placed in a first position on the control device, and
figure 5 shows the detector of figure 3 with a finger moved to a second position on the control device.

### Detailed Description of Embodiments

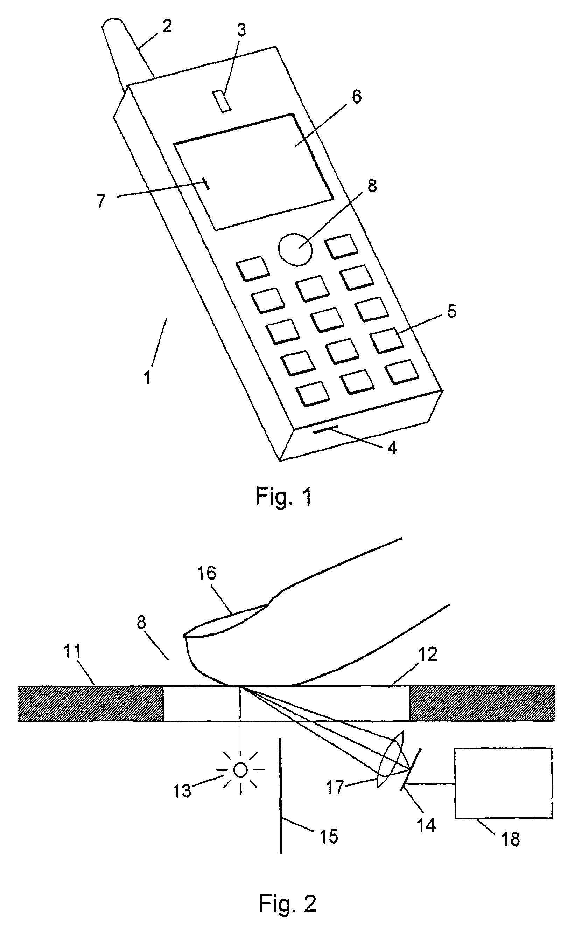

Figure 1 shows an example of a portable radio communications device, in this case a mobile telephone 1, in which the invention can be used. The telephone has an antenna 2, a loudspeaker 3, a microphone 4 and a number of keys 5. The keys 5 are used for entering telephone numbers, messages, etc. A display 6 is provided for presentation of information to the user of the telephone. This information could be numbers or messages entered by means of the keys 5, or it could be information received by the device through the antenna 2. An example of such information could be a menu from which the user can select a specific item, which is done by moving a cursor or pointer 7 around on the display 6.

The movement of the cursor 7 is controlled by the cursor control device 8 according to the invention. This device 8 is an optical control device which will be described in more detail below. The optical control device includes a translucent window integrated into the surface of the telephone 1. The position of the cursor 7 is controlled by moving e.g. a finger on the window of the device 8.

The optical control device 8 may be implemented in several different ways, the construction of which is known per se. One implementation is described below and illustrated in figure 2.

Figure 2 shows the front cover 11 of the mobile telephone 1 and a translucent window 12 arranged in the front cover. The window 12 can be made of any translucent material such as glass or a plastics material, and it is mounted in the front cover in such a way that water, moisture or dust is prevented from entering into the device. The area of the window 12 corresponds to the outline of the control device 8 as shown in figure 1. A light source 13 is placed behind the window 12. The light source 13 will typically be a light emitting diode (LED) or a laser diode, but also other types of light sources are possible. A detector 14 sensitive to the light emitted from the light source 13 is also located behind the window 12, and a shield 15 prevents the light from the light source 13 from being transmitted directly to the detector 14. Alternatively, the light source 13 may be of a directional type so that no light is emitted in the direction of the detector 14.

In a preferred embodiment the light source 13 emits light in a relatively narrow wavelength band only, and the detector 14 has a good sensitivity for light in this wavelength band while the sensitivity for light outside this band is lower. This means that in a situation where no objects are located in front of the window 12 the detector 14 will not detect any light from the light source 13, and it will not be disturbed by ambient light outside the band through the window 12. If, however, an object, such as a finger 16 of a user, is placed in front of the window 12, the light from the light source 13 will be reflected and diffused by the finger, as shown in the figure, and some of the reflected and diffused light will have a direction towards the detector 14. A lens 17 focuses this light such that an image of the contact area between the finger 16 and the window 12 is created on the detector 14.

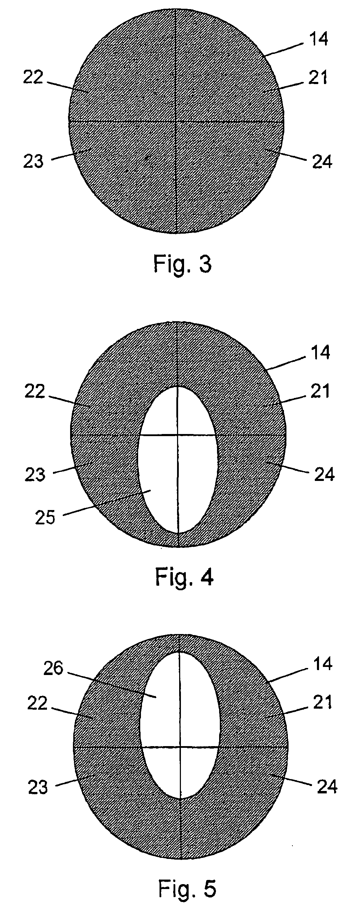

In order to detect the location of the finger 16 on the window 12 the detector 14 can be divided into four segments 21, 22, 23 and 24, as shown in figure 3, which shows the situation before the finger 16 is placed on the window 12, i.e. when no light from the light source 13 is received by the detector 14. Each of these segments of the detector 14 is adapted to provide an electrical output signal proportional to, or at least dependent on, the amount of light received by the segment. These signals are received by a control circuit 18.

Figure 4 shows the detector 14 when a finger 16 is placed on the window 12 and an image 25 of the contact area between the finger and the window surface is created on the detector 14 by the light reflected from the finger. As will be seen, the image 25 is located mainly in the lower part of the detector so that the two segments 23 and 24 receive more light than the segments 21 and 22. Consequently, the segments 23 and 24 also produce higher output signals than the segments 21 and 22. This could be a situation where the finger 16 is placed on the right side of the window 12 in figure 2.

If the finger 16 is moved to the left in figure 2, the image 25 in figure 4 will move correspondingly in the upward direction on the detector 14. This means that the amount of light received by the segments 23 and 24 decreases while that received by the segments 21 and 22 increases correspondingly. A similar change will occur in the output signals from the segments, and the control circuit 18 will detect the change and convert it to a control signal that can be used directly to control the movement of the cursor 7 on the display 6 in an upward direction, i.e. in a direction towards the antenna 2 in figure 1. Figure 5 shows the image 26 of the contact area after the finger has been moved, as described.

If the finger 16 was instead moved in a direction into the paper in figure 2, the image 25 in figure 4 would move to the right, and the amount of light received by the segments 22 and 23 would decrease while that received by the segments 21 and 24 would increase correspondingly. This would also be the case for the corresponding output signals, and the control signal generated by the control circuit 18 would move the cursor 7 to the right on the display 6.

Thus the movement of a finger 16 on the surface of the window 12 results in the generation of a control signal which is used to move the cursor 7 corresponding to the movement of the finger. This gives an easy and direct way of controlling the movement of the cursor on the display of the mobile telephone, and at the same time the moisture-proof window 12 ensures that moisture and dirt cannot enter into the device.

When the cursor 7 has been moved to a certain position on the display indicating a specific item corresponding to e.g. a specific function of the telephone, this item can be selected by using a separate selection button. This button can be a normal mechanical button, or it can be a separate window of the same type like the window 12 where the movement of a finger activates the item indicated by the cursor 7. Alternatively, the selection can also be done by movement of the finger on the window 12 itself. As an example, this can be done by placing the finger on the window and then removing it again after a short time, or the finger can simply be removed from the window very fast after the cursor has been moved to the desired location.

In this way all the keys or buttons, or at least most of them, on a mobile telephone can be replaced by showing the keys on the display and then selecting one of them by first moving the cursor to the right position by means of the finger placed on the window and then selecting the indicated key.

To avoid the risk of unintentional operation of the cursor control device 8 due to the movement of clothing in relation to the window 12 when the mobile telephone is stored in e.g. a pocket, the control circuit 18 can be arranged to be active only when the telephone itself is in an active mode. Alternatively, a separate button can be used to switch the cursor control device 8 on and off, so that the user can activate the device when it is needed and then deactivate it again after the use.

The light source 13 can be of an infrared type, which ensures that the emitted light is not visible from the outside of the window 12. This embodiment is normally preferred, because users are interested in a function and not in how such a function is implemented. On the other hand, an embodiment using light in the visible band will provide the communications device with a high-tech look that could be attractive to especially young people.

In the embodiment described above, the window 12 has a size which is larger than the contact area between the finger 16 and the window. However, it should be noted that in a practical embodiment a much smaller window would be sufficient. The detector 14 does not need the complete image of the contact area in order to detect the movement thereof. In this case, a detector having more than four segments can be advantageous. As an example, a detector of the type which is normally used as sensors in TV cameras can be used.

Also a detector using coherent detection of the light reflected from the finger and utilizing reference light transmitted directly from the light source to detect the movement of the finger can be used.

Although a preferred embodiment of the present invention has been described and shown, the invention is not restricted to it, but may also be embodied in other ways within the scope of the subject-matter defined in the following claims.

## Claims

1. A portable radio communications device (1) having
• a display (6) on which a position indicator (7) can be positioned, and
• means (8) for controlling the position of said position indicator (7) on the display (6) manually by a user,
**characterized in that** said controlling means comprise
• an optical emitter (13) adapted to illuminate an external object (16) through a translucent and moisture-proof surface (12),
• an optical detector (14) adapted to detect changes in light reflected from said external object (16) due to the movement thereof, and
• circuitry (18) for generating a control signal for the position of said position indicator (7) in dependence on said changes in reflected light.

2. A communications device according to claim 1, **characterized in that** the device (1) is a mobile telephone.

3. A communications device according to claim 1 or 2, **characterized in that** the position indicator (7) is a cursor.

4. A communications device according to any one of claims 1 to 3, **characterized in that** said optical emitter (13) emits infrared light.

5. A communications device according to any one of claims 1 to 3, **characterized in that** said optical emitter (13) emits visible light.

6. A communications device according to any one of claims 1 to 5, **characterized in that** the circuitry (18) for generating a control signal is further adapted to generate a selection signal for selecting an item indicated on said display (6) by the position of said position indicator (7).

7. A communications device according to any one of claims 1 to 6, **characterized in that** the controlling means (8) are arranged in a surface of the device adjacent to said display (6).
